# EUROPEAN PATENT APPLICATION

(11) **EP 0 907 028 A1**
(43) Date of publication of application: **07.04.1999**
(21) Application number: 98114633.5
(22) Date of filing: 04.08.1998
(51) Int. Cl.: F04D 25/06, F04D 25/08, H02K 5/10, F04D 29/08

(54) **An electric fan assembly with a hermetically sealed electric motor**

(30) Priority: 03.10.1997 IT TO970878
(71) Applicant: Bitron S.p.A., 10064 Pinerolo(Torino) (IT)
(72) Inventor: D'Ascanio, Nicola, 20131 Milano (IT); Casati, Sergio, 23888 Rovagnate (Milano) (IT); Barbati, Angelo, 21049 Tradate (Varese) (IT)
(74) Representative: Di Francesco, Gianni

(57) **Abstract**

An electric fan assembly with a hermetically sealed electric motor mounted in a scroll-shaped open box (15) comprises an electric motor including a rotor (12) and a stator (11), a fan wheel (13) secured for rotation to the rotor by means of a vertical shaft (14) having its lower support in the stator base (16). The electric fan assembly comprises a concave cap (20) disposed upside-down and interposed between the fan wheel and the rotor. The cap extends downwardly to cover the motor and hermetically seal the motor from the ambient of the fan wheel and form a lower outer rim (23) provided with a gasket (24) fitted against the base (15) of the scroll-shaped open box. The cap has a central upper opening (19) for allowing the passage of the shaft (14) and provide an upper support therefor.

## Description

The present invention refers to an electric fan assembly with a hermetically sealed electric motor, in particular for installation within domestic electrical apparatuses such as washer-dryers and similar appliances, and generally in all machines where the electric fan assembly operates in an ambient that could be considered aggressive for an electric motor.

In order to ensure a sufficiently long useful life for the above kind of motors, it is of primary importance for the electric motors to be hermetically insulated form an aggressive ambient. This problem is particularly present with applications on washer-dryers, wherein an electric motor is installed for ventilating air with a high water content in the drying phase. During some phases of the washing cycle, the electric fan assembly can be surrounded by vapours of a water and detergent solution, at temperatures varying according to the washer-dryer cycle being performed; these temperatures can rise up to 90°C. Any infiltration of fluid and aggressive agents into the electric motor has to be prevented, as the motor operation would be quickly jeopardised, particularly with regard to the stator windings.

Electric fan assemblies normally installed in washer-dryer machines are mounted in a scroll-shaped open box, and are comprised of an electric motor with an outer rotor. A centrifugal fan wheel is fitted to the upper projecting end portion of the rotor shaft.

In an attempt to solve the above problem concerning the sealing of the motor, there have heretofore been proposed several solutions in which an additional protective baffle is interposed between the rotor and the fan wheel. To separate the motor from the ambient of the fan wheel, the rotor is covered by a cup-shaped baffle of a fluid-impermeable material. Such an impermeable baffle has a central hole for allowing the passage of the rotor output shaft. To ensure hermetical sealing of the motor, in most instances a sealing gasket is mounted on the shaft near the baffle hole. The gasket slides contacting the surface of the baffle around the hole. The lower peripheral edge of the baffle is hermetically fixed in known manner to the stator support or the base of the scroll.

The sealing gasket mounted on the shaft and sliding against the baffle can not ensure a prolonged sealing action. On one hand, the gasket wears out rather quickly owing to friction in sliding against the non perfectly even material constituting the baffle; on the other hand, it is difficult to centre the baffle exactly so as to locate its upper hole coaxial to the shaft. Further, eccentricity between the shaft, the bore and the gasket tends to accelerate the wear of the gasket.

In still other instances, the gasket is mounted directly on the baffle hole. To allow centring of the gasket relative to the shaft, it is however necessary that some radial play is provided for between the gasket and the baffle. This solution has a disadvantage in that it does not ensure hermetical sealing of the motor; particularly, it allows pressurised fluids to enter the motor and involves a quick wear of those parts of the gasket in contact with the baffle.

Furthermore, the above solution has a drawback in that the space available for the motor is limited by the interposition of the baffle between the fan wheel and the motor.

Finally, with the above discussed solution, which requires an expenditure of time and materials for manufacturing and installing the baffle, practical problems arise when the fan wheel has to be balanced. This balancing operation is rather difficult and time consuming, as it has to be carried out when the motor is mounted on the scroll-box base plate and fitted with the baffle.

It is an object of the present invention to provide an electric fan assembly capable of overcoming the above prior art solutions requiring the addition of a protective baffle between the motor and the fan wheel.

Another object of the present invention is to provide an electric fan assembly wherein the motor is hermetically sealed relative to the ambient in which the fan wheel works.

In accordance with one aspect of the invention as claimed, these objects are accomplished by the provision of an electric fan assembly with a hermetically sealed electric motor mounted in a scroll-shaped open box, the electric fan assembly comprising an electric motor including a rotor and a stator, a fan wheel secured for rotation to said rotor by means of a substantially vertical shaft having its lower support in the stator base, characterised in that the electric fan assembly comprises a concave cap disposed upside-down and interposed between the fan wheel and the rotor, the cap extending downwardly to cover the motor and hermetically seal the motor from the ambient of the fan wheel and form a lower outer rim provided with hermetical sealing means fitted against the base of said scroll-shaped open box; the cap having a central upper opening adapted to allow the passage of the shaft and provide an upper support therefor.

Advantageous embodiments of the electric fan assembly of the present invention are defined in the dependent claims.

In order that the present invention may be well understood there will now be described a preferred embodiments thereof, given by way of example, reference being made to the accompanying drawings, which is an axial cross sectional view of an electric fan assembly in accordance with the present invention, wherein portions of the fan wheel are broken off to show the inner parts of the motor.

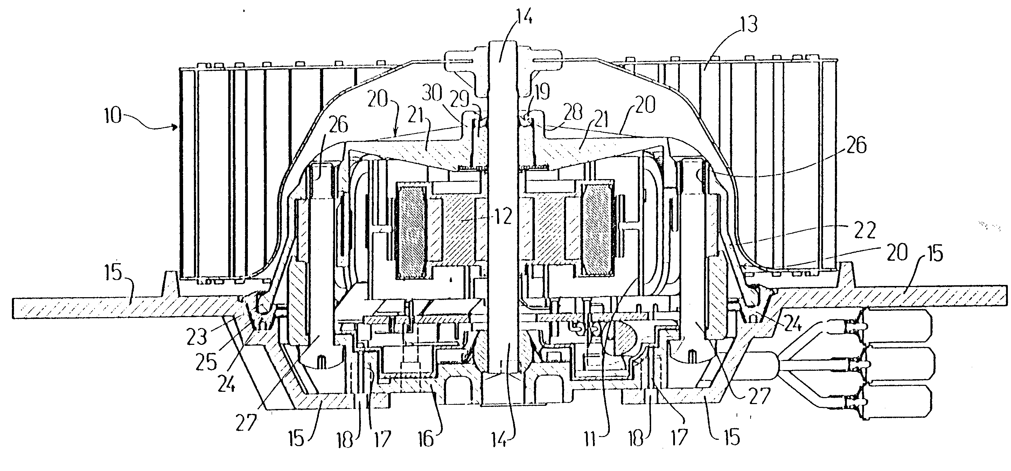

With reference to the drawing, an electric fan assembly according to the present invention is designated overall at 10. The electric fan assembly comprises a brushless electric motor with an inner rotor 12 and a permanent magnet outer stator 11. A fan wheel 13 of centrifugal type with racial blades is secured for rotation with the rotor by means of a shaft 14. The electric fan assembly 10 is inserted in a half-shell in form of an open scroll, of which numeral 15 designates a portion of the base. The fan wheel recalls air axially into the open scroll and expels it radially by centrifugation. The shaft 14, forcefully fitted in the rotor 12, is disposed substantially vertical and has its own lower support in the motor base 16. The motor base 16 is fixed to the scroll base for example by fastening means such as screws (not shown) inserted in aligned holes 17, 18 formed in the motor base 16 and the scroll base 15, respectively.

According to the present invention, the upper support of the shaft 14 is obtained in a central aperture 19 of a concave cap 20 interposed between the electric motor and the fan wheel and disposed upside-down so as to cover the electric motor from above.

In the illustrated embodiment, the cap 20 has substantially the shape of a wide upside-down vase, being it understood that the cap may also have other shapes as a function of the electric motor construction, still within the scope of this invention. In the cap 20 there can be distinguished a substantially horizontal upper central portion 21 and an outer side portion 22 of substantially cylindrical or slightly frustoconical shape. The outer side portion 22 terminates forming a lower thicker and rounded rim 23 sealingly engaged in an annular gasket 24. Gasket 24 is fitted on the rim 23 and is accommodated in a circular grove or seat 25 formed in the base plate 15 of the scroll box.

Formed in the cap 20, and preferably at the zone joining the central portion 21 and the side portion 22, is a plurality of threaded seats 26 adapted for accommodating the end portions of screws 27 for assembling the motor.

Hermetic sealing action on the shaft 14 extending through the central aperture 18 of cap 20 is performed by means of an upper gasket 28 axially locked in a flanged bushing 29 housed in a seat 30 of the cap 20. The upper sealing element 28 by sliding on the even metallic surface of the shaft 14 ensures with time, in combination with the base gasket 24, a good sealing action for the electric motor with respect to the environment in which the fan wheel works.

Preferably, the base annular gasket 24 is so sized as to have a vertical thickness such that it remains elastically compressed between the cap rim 23 and the seat 25 upon tightening the fastening members (not shown) being inserted in the holes 17, 18 to mount the electric fan assembly in the scroll box 15.

It will be appreciated that the cap 20 carries out the dual task of upper supporting means for the rotating parts (rotor, shaft, fan wheel) and separator means, integrated within the electric fan assembly structure, as it hermetically separates the electric motor from the possibly aggressive environment in which the fan wheel works.

The electric fan assembly of the present invention allows for a first cost reduction as the conventional protection baffle is no longer required, and a second, consequent reduction of costs and expenditure of time relative to the assembling operations. Another advantage lies in that it is possible to balance the unit formed by the motor and the fan wheel before mounting this unit to the scroll box. Finally, the fan wheel/electric motor unit has an overall compact design in which the axial bulk is reduced as compared to the conventional solutions discussed in the introductory part of this description. As a result, the inner space is optimised, and it is possible, at equal outer size of the fan wheel, to install a larger and more powerful motor.

## Claims

1. An electric fan assembly with a hermetically sealed electric motor mounted in a scroll-shaped open box (15), the electric fan assembly comprising an electric motor including a rotor (12) and a stator (11), a fan wheel (13) secured for rotation to said rotor by means of a substantially vertical shaft (14) having its lower support in the stator base (16),
characterised in that the electric fan assembly comprises a concave cap (20) disposed upside-down and interposed between the fan wheel and the rotor, the cap extending downwardly to cover the motor and hermetically seal the motor from the ambient of the fan wheel and form a lower outer rim (23) provided With hermetical sealing means (24) fitted against the base (15) of said scroll-shaped open box; the cap having a central upper opening (19) adapted to allow the passage of the shaft (14) and provide an upper support therefor.

2. An electric fan assembly according to claim 1,
characterised in that said central upper opening (19) is fitted with a sealing means (28) slidingly contacting the rotating shaft (14).

3. An electric fan assembly according to claim 1,
characterised in that said outer rim (23) hermetically Sealingly engages an annular gasket (24) accommodated in a circular seat (25) formed in the base (15) of said scroll box.

4. An electric fan assembly according to claim 2,
characterised in that said annular base gasket (24) has a vertical thickness such as to remain elastically compressed between said cap rim (23) and said circular seat (25) upon tightening fastening members for mounting the electric fan assembly to said scroll box.

5. An electric fan assembly according to claim 1,
characterised in that formed in said cap (20) is a plurality of seats (26) adapted for accommodating the end portions of fastening elements (27) for connecting the cap (20) to the stator (11).

6. An electric fan assembly according to claim 1,
characterised in that said electric motor is a brushless motor with an inner rotor (12).
